# EUROPEAN PATENT SPECIFICATION

(11) **EP 4 023 694 B1**
(45) Date of publication and mention of the grant of the patent: **14.02.2024**
(21) Application number: 20856017.7
(22) Date of filing: 24.08.2020
(51) Int. Cl.: C08G 59/02, C08G 59/20, C08G 77/38

(54) **EPOXY GROUP-CONTAINING POLYORGANOSILOXANE, CURABLE RESIN COMPOSITION CONTAINING EPOXY GROUP-CONTAINING POLYORGANOSILOXANE, AND CURED PRODUCT OF SAME**
EPOXIDGRUPPENHALTIGES POLYORGANOSILOXAN, HÄRTBARE HARZZUSAMMENSETZUNG MIT DEM EPOXIDGRUPPENHALTIGEN POLYORGANOSILOXAN UND GEHÄRTETES PRODUKT DARAUS
POLYORGANOSILOXANE CONTENANT UN GROUPE ÉPOXY, COMPOSITION DE RÉSINE DURCISSABLE CONTENANT UN POLYORGANOSILOXANE CONTENANT UN GROUPE ÉPOXY, ET PRODUIT DURCI À BASE DE CELLE-CI

(30) Priority: 27.08.2019 JP 2019154804
(43) Date of publication of application: 06.07.2022
(73) Proprietor: Mitsubishi Chemical Corporation, Chiyoda-ku Tokyo 100-8251 (JP)
(72) Inventor: HARUTA, Yuki, Tokyo 100-8251 (JP); OGASAWARA, Hayato, Tokyo 100-8251 (JP); HIRASE, Shohei, Tokyo 100-8251 (JP); TERADA, Noriaki, Tokyo 100-8251 (JP); WATANABE, Takumi, Tokyo 100-8251 (JP); YODA, Shoya, Tokyo 100-8251 (JP)
(74) Representative: Ter Meer Steinmeister & Partner
(86) International application number: PCT/JP2020/031779
(87) International publication number: WO 2021/039694

(56) References cited:
- WO-A1-2015/099934
- WO-A1-2019/163970
- JP-A- S6 426 693
- JP-A- H05 306 338
- JP-A- 2005 343 998
- JP-A- 2006 213 763
- JP-A- 2008 274 004
- JP-A- 2008 274 004
- JP-A- 2009 227 849
- JP-A- 2014 167 082
- JP-A- 2017 500 420

## Description

### Technical Field

The present invention relates to a curable polyorganosiloxane with an epoxy group. The present invention also relates to a curable resin composition and a cured product produced using the polyorganosiloxane with an epoxy group.

### Background Art

Epoxy resins shrink less and accumulate less internal stress upon curing and are therefore known to have high forming accuracy. Epoxy resins are preferably used as photocationic curable resins. Epoxy resins used as photocationic curable resins have a problem with an improvement in curability. NPL 1 describes an alicyclic epoxy resin with a siloxane backbone.

Document WO 2015/099934 discloses in its example 3 an epoxysiloxane having M, D and Q units. The epoxy groups are of a type corresponding to formula (2) in present claim 1.

Document JP2008274004 discloses in its synthesis examples 1 and 2 a polymer exhibiting a combination of groups of type (2) and of type (3).

NPL 1: Journal of Polymer Science: Part A: Polymer Chemistry, Vol. 28, 479-503 (1990)

A cured film of an alicyclic epoxy resin described in NPL 1 had insufficient surface properties, adhesiveness, and impact resistance. Furthermore, although this alicyclic epoxy resin has a somewhat high photocuring rate, the alicyclic epoxy resin has poor compatibility with a photopolymerization initiator and another resin to be mixed to form a cured product by light and takes a long time to cure.

### Summary of Invention

The present invention has been made in view of these problems of the related art.

It is an object of the present invention to provide a polyorganosiloxane with an epoxy group, a curable resin composition, and a cured product with high compatibility with an initiator and another resin, low viscosity, a high curing rate, and high adhesiveness and impact resistance.

The present inventors have found that the problems can be solved by using a polyorganosiloxane with an epoxy group that has an M unit (R¹R²R³SiO_{1/2}), a D unit (R⁴R⁵SiO_{2/2}), and a Q unit (SiO_{4/2}), has a T unit (R⁶SiO_{3/2}) content of 80% or less by mole of the total silicon, and has a specific epoxy group.

### Advantageous Effects of Invention

The present invention provides a polyorganosiloxane with an epoxy group, a curable resin composition, and a cured product with high compatibility with an initiator and another resin, low viscosity, a high curing rate, and high adhesiveness and impact resistance.

Due to these advantages, a polyorganosiloxane with an epoxy group, a curable resin composition, and a cured product according to the present invention can be applied to electrical and electronic materials, fiber-reinforced plastics (FRP), adhesive agents and paints, dental materials, inks for 2D/3D printers, and the like. In particular, epoxy resins shrink less and accumulate less internal stress upon curing, and a cured product containing a polyorganosiloxane with an epoxy group according to the present invention has good surface properties. Thus, the present invention can be suitable for thick products, for example, thick FRP, dental materials, formed products produced by 3D printers, and the like.

### Description of Embodiments

Embodiments of the present invention are described in detail below. The present invention is not limited to the following description. In the present specification, a range expressed by numerical values or physical properties before and after "to" means a range including these numerical values or physical properties.

### [Polyorganosiloxane with Epoxy Group]

A polyorganosiloxane with an epoxy group is a polymer that has a siloxane bond as a main chain and has an epoxy group, and is represented, for example, by the general composition formula (1):

[Chem. 5] (R¹R²R³SiO_{1/2})ₐ(R⁴R⁵SiO_{2/2})_{b}(R⁶SiO_{3/2})_{c}(SiO_{4/2})_{d}(O_{1/2}R⁷)ₑ(O_{1/2}H)_{f}

wherein R¹ to R⁶ independently denote a hydrogen atom, an optionally substituted monovalent organic group having 1 to 20 carbon atoms, a group represented by the following formula (2), or a group represented by the following formula (3). A polyorganosiloxane with an epoxy group according to the present invention has both the group represented by the following formula (2) and the group represented by the following formula (3) in its composition formula, a + b + c + d = 1, and 0 ≤ e + f < 4. R⁷ denotes a monovalent organic group having 1 to 7 carbon atoms.

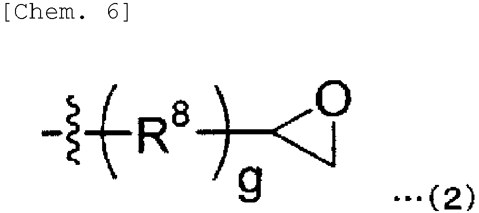

In the formula (2), R⁸ denotes an optionally substituted divalent organic group having 1 to 20 carbon atoms. g is 0 or 1,

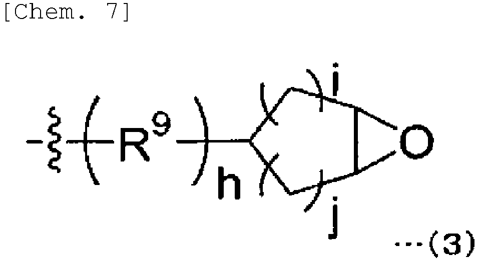

In the formula (3), R⁹ denotes an optionally substituted divalent organic group having 1 to 20 carbon atoms. h is 0 or 1, 0 ≤ i ≤ 8, and 0 ≤ j ≤ 8.

A polyorganosiloxane with an epoxy group according to the present invention has the M unit (R¹R²R³SiO_{1/2}), the D unit (R⁴R⁵SiO_{2/2}), and the Q unit (SiO_{4/2}) and has a T unit (R⁶SiO_{3/2}) content of 80% or less by mole of the total silicon.

A polyorganosiloxane with an epoxy group according to the present invention preferably satisfies the following (I) to (III).
(I) The M unit (R¹R²R³SiO_{1/2}) content ranges from 10% to 75% by mole of the total silicon.
(II) The Q unit (SiO_{4/2}) content is 3% or more by mole of the total silicon.
(III) The D unit (R⁴R⁵SiO_{2/2}) content is 10% or less by mole of the total silicon.

These unit contents of a polyorganosiloxane with an epoxy group according to the present invention can be analyzed by ²⁹Si-NMR measurement, as described in the section of examples described later.

### <M Unit>

A polyorganosiloxane with an epoxy group according to the present invention must have the M unit (R¹R²R³SiO_{1/2}). The value "a" in the formula (1), which means the ratio of the M unit (R¹R²R³SiO_{1/2}) to the total silicon, is preferably 0.1 or more (that is, the M unit (R¹R²R³SiO_{1/2}) content is 10% or more by mole of the total silicon; the same applies to mole percentages in parentheses), more preferably 0.2 or more (20% or more by mole), still more preferably 0.5 or more (50% or more by mole), particularly preferably 0.55 or more (55% or more by mole). A value "a" of 0.1 or more, that is, a M unit content equal to or higher than a certain lower limit makes it easy to control the molecular weight of the polyorganosiloxane with an epoxy group. The value "a" is less than 1 (less than 100% by mole), preferably 0.9 or less (90% or less by mole), more preferably 0.75 or less (75% or less by mole), still more preferably 0.7 or less (70% or less by mole), particularly preferably 0.65 or less (65% or less by mole). A value "a" in such a range, that is, a M unit content equal to or lower than a certain upper limit is preferred because the molecular weight can be easily controlled in an appropriate range that is not too low and because the increase of a low-boiling-point component can be suppressed to prevent the flash point from decreasing.

### <T Unit>

In a polyorganosiloxane with an epoxy group according to the present invention, the value "c" in the formula (1), which means the ratio of the T unit (R⁶SiO_{3/2}), is 0.8 or less (that is, the T unit (R⁶SiO_{3/2}) content is 80% or less by mole of the total silicon; the same applies to mole percentages in parentheses), preferably 0.65 or less (65% or less by mole). The ratio "c" of the T unit (R⁶SiO_{3/2}) is typically 0 or more. A value "c" in the formula (1) in such a range is preferred because a cured product of the polyorganosiloxane with an epoxy group can have moderate rigidity. In particular, a value "c" of 0.8 or less is preferred because the viscosity of the polyorganosiloxane with an epoxy group can be easily maintained in a manageable range and because the brittleness of a cured product can be improved. When the M unit includes an epoxy group, the value "c" is preferably 0 when the epoxy group content is further increased.

Even if the T unit is not in such a preferred range, a polyorganosiloxane with an epoxy group having the Q unit described later in an appropriate range can have appropriate rigidity when cured.

### <Q Unit>

A polyorganosiloxane with an epoxy group according to the present invention has the Q unit represented by (SiO_{4/2}), that is, the value "d" in the formula (1) is more than 0, preferably 0.03 or more (that is, the Q unit (SiO_{4/2}) content is 3% or more by mole of the total silicon; the same applies to mole percentages in parentheses), more preferably 0.2 or more (20% or more by mole), still more preferably 0.3 or more (30% or more by mole). The ratio "d" of the Q unit (SiO_{4/2}) is preferably 0.7 or less (70% or less by mole), more preferably 0.5 or less (50% or less by mole), still more preferably 0.4 or less (40% or less by mole). The Q unit improves heat resistance. A value "d" in the formula (1) in such a range is preferred because the polyorganosiloxane with an epoxy group is not likely to have excessively high viscosity and because a cured product of the polyorganosiloxane with an epoxy group can have moderate rigidity. At a value "d" of more than 0.7 in the formula (1), when the polyorganosiloxane is mixed with another epoxy or acrylic compound and is cured, the cured product can have improved toughness, such as breaking strength.

Even if the Q unit is not in such a preferred range, a polyorganosiloxane with an epoxy group having the T unit in an appropriate range can have appropriate rigidity when cured.

### <D Unit>

A polyorganosiloxane with an epoxy group according to the present invention has the D unit represented by (R⁴R⁵SiO_{2/2}), that is, the value "b" in the formula (1) is more than 0, preferably 0.01 or more (that is, the D unit (R⁴R⁵SiO_{2/2}) content is 1% or more by mole of the total silicon; the same applies to mole percentages in parentheses). The upper limit of the value "b" is preferably, but not limited to, 0.3 or less (30% or less by mole), more preferably 0.1 or less (10% or less by mole). The D unit (R⁴R⁵SiO_{2/2}) in such a range makes it easy to maintain a high elastic modulus of the cured product. The D unit (R⁴R⁵SiO_{2/2}) content is preferably equal to or higher than a certain lower limit because the polyorganosiloxane with an epoxy group is less likely to have a cage structure and is prevented from having an excessively high viscosity and because a cured product of the organosiloxane with an epoxy group can be prevented from becoming too hard.

### <End Group>

The amounts of end groups (O_{1/2}R⁷) and (O_{1/2}H) of a polyorganosiloxane with an epoxy group according to the present invention in the formula (1) are typically, but not limited to, 0 ≤ e + f < 4, preferably 0 ≤ e + f < 2, more preferably 0 ≤ e + f < 1, still more preferably 0 ≤ e + f < 0.5. Because these end groups are typically reactive, a small e + f is preferred due to tendency of high storage stability.

R⁷ in (O_{1/2}R⁷), which denotes an end group other than a hydroxy group, is preferably, but not limited to, a hydrocarbon group having 1 to 7 carbon atoms, more preferably a methyl group, an ethyl group, or an isopropyl group. Because R⁷ is one of these groups with a relatively few carbon atoms, R⁷ is less likely to sterically inhibit a reaction of introducing an epoxy group or a reaction of curing a polyorganosiloxane with an epoxy group produced.

### <Type of Epoxy Group>

A polyorganosiloxane with an epoxy group according to the present invention may have any type of epoxy group including the groups represented by the formulae (2) and (3). Examples of the group represented by the formula (2) include groups with a terminal ethylene oxide group exemplified by a glycidyl group. Examples of the group represented by the formula (3) include groups with an alicyclic epoxy group, such as a cyclohexene oxide group, and without a terminal ethylene oxide. The ratio of each group can be appropriately determined according to desired performance and is preferably controlled according to desired characteristics in consideration of the characteristics of each epoxy group described later.

An epoxy group other than the groups represented by the formulae (2) and (3) may be used in combination.

For example, to improve adhesiveness to a substrate, improve compatibility with an initiator or another resin, or decrease viscosity, a polyorganosiloxane with an epoxy group according to the present invention preferably has a large number of groups represented by the formula (2), more preferably a large number of groups represented by the formula (4) or (5), still more preferably a large number of groups represented by the formula (4).

Examples of the optionally substituted divalent organic group R⁸ having 1 to 20 carbon atoms in the formula (2) include divalent organic groups corresponding to groups exemplified by the optionally substituted monovalent organic group having 1 to 20 carbon atoms of R¹ to R⁶ (from which one hydrogen atom is removed).

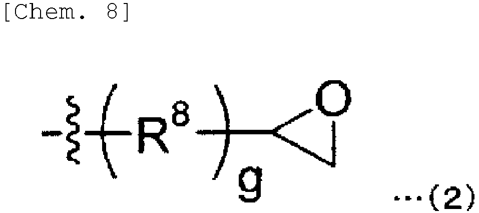

In the formula (2), R⁸ denotes an optionally substituted divalent organic group having 1 to 20 carbon atoms. g is 0 or 1,

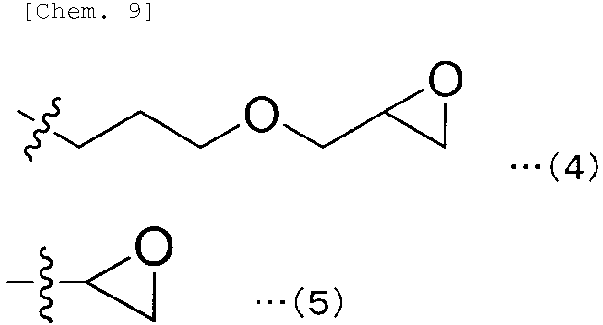

For example, to improve curability, it is preferable to have a large number of groups represented by the formula (3), more preferable a large number of groups represented by the following formula (6), (7), or (8), still more preferable a large number of groups represented by the formula (6).

Examples of the optionally substituted divalent organic group R⁹ having 1 to 20 carbon atoms in the formula (3) include divalent organic groups corresponding to groups exemplified by the optionally substituted monovalent organic group having 1 to 20 carbon atoms of R¹ to R⁶ (from which one hydrogen atom is removed).

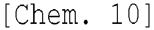

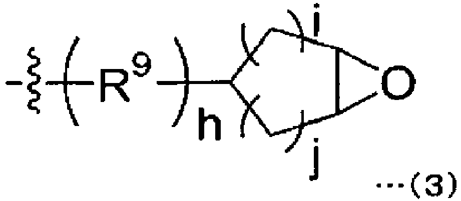

In the formula (3), R⁹ denotes an optionally substituted divalent organic group having 1 to 20 carbon atoms. h is 0 or 1, 0 ≤ i ≤ 8, and 0 ≤ j ≤ 8.

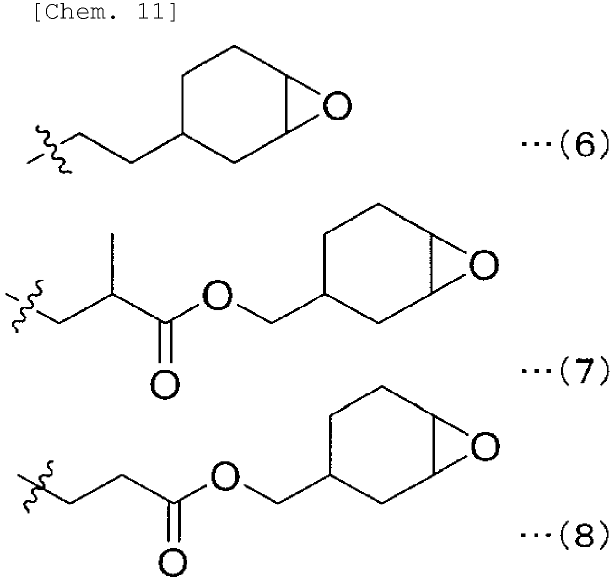

In a polyorganosiloxane with an epoxy group according to the present invention, the mole ratio of the group represented by the formula (2) to the group represented by the formula (3) preferably ranges from 5:95 to 95:5. This ratio more preferably ranges from 10:90 to 80:20, still more preferably 20:80 to 70:30, particularly preferably 30:70 to 60:40.

### <Group without Epoxy Group among R¹ to R⁶>

A group without an epoxy group among R¹ to R⁶ in the formula (1) may have any structure. R¹ to R⁶ independently denote a hydrogen atom or an optionally substituted monovalent organic group having 1 to 20 carbon atoms. Specific examples include a hydrogen atom, linear alkyl groups having 1 to 20 carbon atoms, branched alkyl groups having 1 to 20 carbon atoms, alkyl groups with a ring structure having 1 to 20 carbon atoms, aromatic hydrocarbon groups having 1 to 20 carbon atoms, and heterocyclic groups having 1 to 20 carbon atoms. Among these, more preferred are a hydrogen atom, alkyl groups, such as a methyl group, an ethyl group, a propyl group, an isopropyl group, a butyl group, a sec-butyl group, a tert-butyl group, an octyl group, and a cyclohexyl group, aromatic functional groups, such as a phenyl group, a naphthyl group, a carbazole group, and a phenethyl group, and ether groups, such as a furanyl group and a poly(ethylene glycol) group, and still more preferred are a hydrogen atom, a methyl group, and a phenyl group.

Examples of the M unit (R¹R²R³SiO_{1/2}) in the formula (1) include a trimethylsiloxy group (Me₃SiO_{1/2}), a dimethylsiloxy group (Me₂HSiO_{1/2}), a methylsiloxy group (MeH₂SiO_{1/2}), a trihydrosiloxy group (H₃SiO_{1/2}), a dimethyl vinyl siloxy group (Me₂ViSiO_{1/2}), a dimethyl methacryloxypropylsiloxy group (Me₂(MaOPr)SiO_{1/2}), a triphenylsiloxy group (Ph₃SiO_{1/2}), a diphenylsiloxy group (Ph₂HSiO_{1/2}), a phenylsiloxy group (PhH₂SiO_{1/2}), a methylphenylsiloxy group (MePhHSiO_{1/2}), a dimethylphenylsiloxy group (Me₂PhSiO_{1/2}), a methyldiphenylsiloxy group (MePh₂SiO_{1/2}), and the like. A polyorganosiloxane with an epoxy group according to the present invention may contain only one of these M units or two or more of these M units, optionally in combination with an M unit with an epoxy group. More specifically, a polyorganosiloxane with an epoxy group according to the present invention may contain a trimethylsiloxy group and a triphenylsiloxy group or may contain a trimethylsiloxy group and a glycidyloxypropyl dimethylsiloxy group.

If necessary, an M unit with an epoxy group may be used alone. More specifically, a polyorganosiloxane with an epoxy group according to the present invention may have a glycidyloxypropyl dimethylsiloxy group and a (3,4-epoxycyclohexyl) ethyldimethylsiloxy group as M units and may not have any other M units.

R⁴ and R⁵ of the D unit (R⁴R⁵SiO_{2/2}) in the formula (1) may be the same functional group or a combination of different functional groups as in the M unit described above. A polyorganosiloxane with an epoxy group according to the present invention may have only one D unit or two or more D units.

The T unit (R⁶SiO_{3/2}) in the formula (1) may be of only one type or of two or more types as in the M unit described above. If necessary, a T unit with an epoxy group may be used alone as the T unit.

It should be noted that R¹ to R⁶ in the formula (1) include at least one group with an epoxy group.

A group with an epoxy group may be bonded to any silicon atom unit of the M unit, the D unit, or the T unit, may contain all of the M unit with an epoxy group, the D unit with an epoxy group, and the T unit with an epoxy group, or may contain one or two of these. A group with an epoxy group is preferably bonded to the M unit in terms of high reactivity.

### <Maximum Absorption Wave Number of Si-O Stretching Vibration>

A polyorganosiloxane with an epoxy group according to the present invention is preferably a polyorganosiloxane with an epoxy group that has the Q unit represented by (SiO_{4/2}) and has a maximum absorption wave number of a Si-O stretching vibration in the wave number range of 1030 to 1060 cm⁻¹ in infrared absorption spectrum analysis.

In the infrared absorption spectrum analysis, the maximum absorption wave number of the Si-O stretching vibration in the above wave number range is preferred because it is possible to avoid an extremely rigid structure like cage silsesquioxane and because the polyorganosiloxane with an epoxy group is liquid and is easy to handle. The maximum absorption wave number means the wave number that gives the maximum absorbance in a specific wave number region. In the present embodiment, the wave number that gives the maximum absorbance in the wave number range of 1000 to 1200 cm⁻¹ is defined as the maximum absorption wave number.

The maximum absorption wave number in the infrared absorption spectrum analysis can be measured by an ATR method (a total reflection measurement method) with a Fourier transform infrared spectrometer.

A polyorganosiloxane with an epoxy group according to the present invention preferably does not have an absorption peak of Si-O stretching vibration arising from cage silsesquioxane in the wave number range of 1070 to 1150 cm⁻¹ in the infrared absorption spectrum analysis. No absorption peak of the Si-O stretching vibration in this wave number range is preferred because it is possible to avoid an extremely rigid structure like cage silsesquioxane and because the polyorganosiloxane with an epoxy group is liquid and is easy to handle.

A characteristic absorption band derived from an organic molecule other than Si-O may exist in the wave number range of 1070 to 1150 cm⁻¹. Examples of characteristic absorption bands derived from organic molecules include characteristic absorption bands derived from C-O of a hydroxy group, C-O-C of esters, C-O-C of acid anhydrides, C-O-C of ethers, C-N of amines, C-S of sulfonic acids and sulfoxides, C-F of fluorine compounds, P=O and P-O of phosphorus compounds, and SO₄²⁻ and ClO₄⁻ of inorganic salts. Care must be taken not to mistake these for the Si-O stretching vibration.

The absence of these organic groups and inorganic salts can be confirmed, for example, by a nuclear magnetic resonance method or elemental analysis.

When the presence of the organic groups or inorganic salts is confirmed by such a method, the absence of a molecule with a mass number derived from the cage structure can be confirmed by mass spectrometry, such as matrix-assisted laser desorption ionization time-of-flight mass spectrometry (MALDI-TOFMS). The mass number of a molecule derived from the cage structure can be calculated from the raw materials used and the size of the cage structure. For example, when a polyorganosiloxane with a regular hexahedron cage structure is produced by hydrolysis and condensation of a raw material 3-glycidoxypropyltrimethoxysilane, the mass number is approximately 1336. When the peak intensity corresponding to the mass number of a molecule derived from the cage structure is 1% or less of the whole, it can be said that "there is no molecule of the mass number derived from the cage structure", and even if there is a maximum absorption wave number in the wave number range of 1070 to 1150 cm⁻¹, it can be shown that the corresponding peak is not an absorption peak of a Si-O stretching vibration derived from cage silsesquioxane.

### <Epoxy Equivalent>

A polyorganosiloxane with an epoxy group according to the present invention preferably has an epoxy equivalent of 100 gram/equivalent or more, more preferably 150 gram/equivalent or more, still more preferably 200 gram/equivalent or more. When the epoxy equivalent is equal to or higher than the lower limit, the cured film can have good surface properties, high strength and heat resistance due to a high cross-linking density, and in particular high adhesiveness.

A polyorganosiloxane with an epoxy group according to the present invention preferably has an epoxy equivalent of 5000 gram/equivalent or less, more preferably 2000 gram/equivalent or less, still more preferably 1000 gram/equivalent or less. When the epoxy equivalent is equal to or lower than the upper limit, the coating film can have improved surface properties due to less cure shrinkage while good curability and adhesiveness are maintained, and can have increased impact resistance due to an appropriate cross-linking density.

The term "epoxy equivalent", as used herein, refers to "the mass of epoxy resin (polyorganosiloxane with an epoxy group in the present invention) with one equivalent of epoxy group" and can be determined according to JIS K 7236.

### <Weight-Average Molecular Weight (Mw)>

The weight-average molecular weight (Mw) of a polyorganosiloxane with an epoxy group according to the present invention is preferably, but not limited to, 300 or more, more preferably 500 or more, particularly preferably 700 or more to improve the surface properties of the cured film.

A polyorganosiloxane with an epoxy group according to the present invention preferably has a weight-average molecular weight (Mw) of 10000 or less, more preferably 7500 or less, particularly preferably 5000 or less in terms of handleability.

### <Number-Average Molecular Weight (Mn)>

The number-average molecular weight (Mn) of a polyorganosiloxane with an epoxy group according to the present invention is preferably, but not limited to, 150 or more, more preferably 250 or more, particularly preferably 600 or more in terms of the surface properties of the cured film.

A polyorganosiloxane with an epoxy group according to the present invention preferably has a number-average molecular weight (Mn) of 9000 or less, more preferably 6500 or less, particularly preferably 4000 or less in terms of handleability.

The ratio (Mw/Mn) of the weight-average molecular weight (Mw) to the number-average molecular weight (Mn) is used to represent the degree of dispersion of the molecular weight distribution. A polyorganosiloxane with an epoxy group (A) according to the present invention may have any degree of dispersion (Mw/Mn). The lower limit of the degree of dispersion is 1.00 or more, preferably 1.01 or more, more preferably 1.05 or more, particularly preferably 1.07 or more to improve the surface properties of the cured film. The upper limit is typically 4.0 or less, preferably 3.5 or less, more preferably 3.2 or less, still more preferably 2.0 or less, particularly preferably 1.8 or less to improve the surface properties of the cured film.

The weight-average molecular weight and the number-average molecular weight of a polyorganosiloxane with an epoxy group can be determined by gel permeation chromatography (GPC). An example of a more detailed method is described later in the example section.

### <Amount of Low-Boiling-Point Component>

Although a polyorganosiloxane with an epoxy group according to the present invention may contain any amount of low-boiling-point component, a small amount of low-boiling-point component results in improved safety during transport and storage due to an increased flash point and results in less thickness reduction and less embrittlement caused by the thickness reduction during heat curing or during use of the cured product.

The amount of low-boiling-point component in a polyorganosiloxane with an epoxy group according to the present invention can be expressed as a weight loss rate when heated at 110°C for 2 hours under a reduced pressure of 0.15 torr, for example. The weight loss rate is preferably 10% or less by weight, more preferably 8% or less by weight, still more preferably 5% or less by weight.

More specifically, the amount of low-boiling-point component can be determined through the following procedures.
(1) ¹H-NMR is measured to calculate the weight of components other than a polyorganosiloxane, such as an organic solvent.
(2) A 16 x 3.5 mm oval PTFE rotor is put into a 1-L eggplant-shaped flask, and these are weighed. The polyorganosiloxane is put into the eggplant-shaped flask and is weighed. The amount of the polyorganosiloxane is preferably 200 g.
(3) The eggplant-shaped flask is heated in an oil bath. The rotor is rotated with a magnetic stirrer to move the liquid surface. The pressure of the eggplant-shaped flask is decreased with an oil vacuum pump. The pressure preferably ranges from 0.2 to 0.1 torr, which is measured with a manometer, and is preferably decreased to 0.15 torr.
(4) After two hours, the eggplant-shaped flask is cooled to room temperature, is returned to atmospheric pressure with nitrogen gas, and is wiped to sufficiently remove oil adhered thereon. The weight of the eggplant-shaped flask containing the polyorganosiloxane is measured, and the measured weight of the eggplant-shaped flask and the rotor is subtracted to calculate the weight volatilized by the operation.
(5) ¹H-NMR of the polyorganosiloxane after the operation is measured to calculate the weight of components other than the polyorganosiloxane, such as an organic solvent. The volatile amount of the polyorganosiloxane is calculated by subtracting the amount of components other than the polyorganosiloxane from the volatile weight. The weight loss of the polyorganosiloxane is preferably less than 10 g when 200 g of the polyorganosiloxane is charged.

When the amount of components other than the polyorganosiloxane is 10% or more by weight, volatilization of the components other than the polyorganosiloxane decreases the internal temperature and suppresses volatilization of the polyorganosiloxane. Thus, when the amount of components other than the polyorganosiloxane is 10% or more by weight, the amount of components other than the polyorganosiloxane is preferably decreased to less than 1% by weight at a temperature of 60°C under a reduced pressure of 10 torr.

### <Method for Producing Polyorganosiloxane with Epoxy Group>

A polyorganosiloxane according to the present invention may be produced by any method for producing a polyorganosiloxane represented by the formula (1).

Examples include
a method of condensing one or simultaneously two or more of disiloxane compounds, disilazane compounds, and hydrolysates thereof, and alkoxysilane compounds and hydrolysates and partially hydrolyzed condensates thereof;
a method of condensing a chlorosilane compound, a hydrolysate thereof, or a partially hydrolyzed condensate thereof;
a ring-opening polymerization method of a cyclic siloxane compound; and
chain polymerization including anionic polymerization.

A plurality of production methods may be used in combination.

The epoxy group may be introduced by any method, for example, by
a method of condensing one or simultaneously two or more of alkoxysilane compounds, disiloxane compounds, disilazane compounds, and hydrolysates and partially hydrolyzed condensates thereof, each having an epoxy group; and
a method of converting a group other than the epoxy group introduced into the polyorganosiloxane into an epoxy group by a chemical method.

These methods may be used in combination.

The method of converting a group other than the epoxy group into an epoxy group by a chemical method may be
a method of reacting a polyorganosiloxane having a structure in which a hydrogen atom is directly connected to a silicon atom with a compound having an alkenyl group having an epoxy group;
a method of reacting a polyorganosiloxane having an alkenyl group with a thiol compound having an epoxy group; or
a method of oxidizing an alkenyl group of a polyorganosiloxane with the alkenyl group using an oxidizing agent.

After the reaction, the polyorganosiloxane may be fractionated into a polyorganosiloxane with a desired epoxy equivalent or molecular weight by column chromatography, GPC, solvent extraction, distilling off unnecessary components, or the like. A low-boiling-point component may also be removed by reducing pressure or by heating.

### <Solvent for Production of Polyorganosiloxane with Epoxy Group>

A solvent may or may not be used to produce a polyorganosiloxane with an epoxy group. When a solvent is used, water and/or an organic solvent can be used, and an organic solvent is particularly preferred. The solvent is more preferably tetrahydrofuran, toluene, hexane, heptane, acetone, ethyl acetate, methanol, ethanol, isopropanol, chloroform, or dichloromethane. Tetrahydrofuran, toluene, and methanol are still more preferred in terms of solubility, ease of removal, and low environmental hazard. These solvents may be used in combination, and different solvents may be used in different reaction processes. When a polyorganosiloxane backbone is formed by hydrolysis and condensation of an alkoxysilane compound, a chlorosilane compound, or the like, an appropriate amount of water may be added to accelerate the hydrolysis.

### <Temperature and Pressure Conditions for Production of Polyorganosiloxane with Epoxy Group>

The reaction temperature for the production of a polyorganosiloxane with an epoxy group is typically, but not limited to, in the range of -40°C to 200°C, preferably -20°C to 150°C, more preferably 0°C to 130°C. At a temperature below such a temperature range, a reaction of forming a desired polyorganosiloxane backbone or a reaction of introducing an epoxy group may be difficult to proceed. At a temperature above such a temperature range, undesired polymerization of an epoxy group or a reaction with another substituent may proceed.

The reaction is performed at any pressure, typically in the range of 0.6 to 1.4 atm, preferably 0.8 to 1.2 atm, more preferably 0.9 to 1.1 atm. At a pressure below such a range, when a solvent is used, the boiling point of the solvent decreases, and the reaction system may not be heated to an appropriate reaction temperature. At a pressure above such a range, the boiling point of the solvent increases, and the reaction system can be heated to accelerate the reaction. However, the reaction under pressurized conditions has the risk of breakage or explosion of the apparatus.

### [Curable Resin Composition]

A curable resin composition according to the present invention contains a polyorganosiloxane with an epoxy group according to the present invention (hereinafter sometimes referred to as a "polyorganosiloxane with an epoxy group (A)") and a curing agent (B).

### <Curing Agent (B)>

The curing agent (B) used for a curable resin composition according to the present invention is a material that contributes to a cross-linking reaction and/or a chain elongation reaction between epoxy groups of a polyorganosiloxane with an epoxy group (A) according to the present invention.

In the present invention, a material that contributes to a cross-linking reaction and/or a chain elongation reaction between epoxy groups of the polyorganosiloxane with an epoxy group (A) is regarded as a curing agent even if it is usually referred to as a "curing accelerator".

The curing agent (B) content of a curable resin composition according to the present invention preferably ranges from 0.1 to 1000 parts by weight, more preferably 100 parts or less by weight, still more preferably 80 parts or less by weight, particularly preferably 60 parts or less by weight, per 100 parts by weight of a polyorganosiloxane with an epoxy group (A) according to the present invention. A more preferred amount of the curing agent (B) is described later for each type of curing agent.

The term "solid component", as used herein, refers to a component except a solvent.

The term "total epoxy component", as used herein, refers to the sum of a polyorganosiloxane with an epoxy group (A) according to the present invention and another epoxy compound (C) described later.

In a curable resin composition according to the present invention, the curing agent (B) is preferably at least one selected from the group consisting of polyfunctional phenols, polyisocyanate compounds, amine compounds, acid anhydride compounds, imidazole compounds, amide compounds, cationic polymerization initiators, and organic phosphines. Specific examples of each curing agent and a preferred curing agent content of a curable resin composition are described below.

A curable resin composition according to the present invention particularly preferably contains at least a cationic polymerization initiator as the curing agent (B) among the following curing agents in terms of curability.

Examples of the polyfunctional phenols include bisphenols, such as bisphenol A, bisphenol F, bisphenol S, bisphenol B, bisphenol AD, bisphenol Z, and tetrabromobisphenol A, and biphenols, such as 4,4'-biphenol and 3,3',5,5'-tetramethyl-4,4'-biphenol; catechol, resorcinol, hydroquinone, and dihydroxynaphthalene; and phenols in which a hydrogen atom bonded to an aromatic ring of these compounds is substituted with an inert substituent, such as a halogen group, an alkyl group, an aryl group, an ether group, an ester group, or an organic substituent containing a heteroelement, such as sulfur, phosphorus, or silicon.

Additional examples of the polyfunctional phenols include novolacs and resoles that are polycondensates of these phenols or monofunctional phenols, such as phenol, cresol, and alkylphenols, and aldehydes.

These polyfunctional phenols may be used alone, or two or more of the polyfunctional phenols may be used in combination at any ratio.

Examples of the polyisocyanate compounds include tolylene diisocyanate, methylcyclohexane diisocyanate, diphenylmethane diisocyanate, dicyclohexylmethane diisocyanate, isophorone diisocyanate, hexamethylene diisocyanate, xylylene diisocyanate, hydrogenated xylylene diisocyanate, dimer acid diisocyanate, trimethylhexamethylene diisocyanate, and lysine triisocyanate. Additional examples of the polyisocyanate compounds include polyisocyanate compounds produced by a reaction of these polyisocyanate compounds with a compound having at least two active hydrogen atoms, such as an amino group, a hydroxy group, a carboxy group, and water, and trimers to pentamers of the polyisocyanate compounds.

These polyisocyanate compounds may be used alone, or two or more of the polyisocyanate compounds may be used in combination at any ratio.

Examples of the amine compounds include aliphatic primary, secondary, and tertiary amines, aromatic primary, secondary, and tertiary amines, cyclic amines, guanidines, and urea derivatives. Specific examples include triethylenetetramine, diaminodiphenylmethane, diaminodiphenyl ether, m-xylene diamine, dicyandiamide, 1,8-diazabicyclo(5,4,0)-7-undecene, 1,5-diazabicyclo(4,3,0)-5-nonene, dimethylurea, and guanylurea.

These amine compounds may be used alone, or two or more of the amine compounds may be used in combination at any ratio.

Examples of the acid anhydride compounds include phthalic anhydride, hexahydrophthalic anhydride, trimellitic anhydride, and condensates of maleic anhydride and unsaturated compounds.

These acid anhydride compounds may be used alone, or two or more of the acid anhydride compounds may be used in combination at any ratio.

Examples of the imidazole compounds include 1-isobutyl-2-methylimidazole, 2-methylimidazole, 1-benzyl-2-methylimidazole, 2-ethyl-4-methylimidazole, 2-phenylimidazole, and benzimidazole. The imidazole compounds also function as curing accelerators, as described later, but are classified as the curing agents (B) in the present invention.

These imidazole compounds may be used alone, or two or more of the imidazole compounds may be used in combination at any ratio.

Examples of the amide compounds include dicyandiamide and derivatives thereof, and polyamide resins.

These amide compounds may be used alone, or two or more of the amide compounds may be used in combination at any ratio.

The cationic polymerization initiators generate cations by heat or active energy radiation and include aromatic onium salts and the like. Specific examples include compounds composed of an anion component, such as SbF₆⁻, BF₄⁻, AsF₆⁻, PF₆⁻, (Rf)ₙPF₍₆₋ₙ₎⁻ (Rf = CF₃(CF₂)ₘ), CF₃SO₃²⁻, or B(C₆F₅)₄⁻, and an aromatic cation component containing an atom such as iodine, sulfur, nitrogen, or phosphorus. In particular, diaryliodonium salts and triarylsulfonium salts are preferred.

Examples of the cationic polymerization initiators include diphenyliodonium hexafluoroarsenate, diphenyliodonium hexafluorophosphate, diphenyliodonium trifluoromethanesulfonate, triphenylsulfonium tetrafluoroborate, tri-p-tolylsulfonium hexafluorophosphate, tri-p-tolylsulfonium trifluoromethanesulfonate, bis(cyclohexylsulfonyl) diazomethane, bis(tert-butylsulfonyl) diazomethane, bis(p-toluenesulfonyl) diazomethane, triphenylsulfonium trifluoromethanesulfonate, diphenyl-4-methylphenylsulfonium trifluoromethanesulfonate, diphenyl-2,4,6-trimethylphenylsulfonium-p-toluenesulfonate, and diphenyl-p-phenylthiophenylsulfonium hexafluorophosphate.

Specific product names include, but are not limited to, sulfonium salts, such as UVACURE 1590 (manufactured by Daicel-Cytec Co., Ltd.), CPI-110P, CPI-100P, CPI-200K (manufactured by San-Apro Ltd.), and IRGACURE 290 (manufactured by BASF), iodonium salts and diazonium salts, such as IRGACURE 250, IRGACURE 290 (manufactured by BASF), WPI-113, WPI-124 (manufactured by Wako Pure Chemical Industries, Ltd.), and Rp-2074 (manufactured by Rhodia Japan): iodonium salts, such as AMERICURE series (manufactured by American Can Company), ULTRASET series (manufactured by Adeka Corporation), and WPAG series (manufactured by Wako Pure Chemical Industries, Ltd.): sulfonium salts, such as UVE series (manufactured by General Electric Company), FC series (manufactured by 3M), UV9310C (manufactured by GE Toshiba Silicones Co., Ltd.), and WPI series (manufactured by Wako Pure Chemical Industries, Ltd.): and CYRACURE series (manufactured by Union Carbide Corporation), UVI series (manufactured by General Electric Company), FC series (manufactured by 3M), CD series (manufactured by Sartomer), Optomer SP series, Optomer CP series (manufactured by Adeka Corporation), San-Aid SI series (manufactured by Sanshin Chemical Industry Co., Ltd.), CI series (manufactured by Nippon Soda Co., Ltd.), WPAG series (manufactured by Wako Pure Chemical Industries, Ltd.), and CPI series (manufactured by San-Apro Ltd.).

These cationic polymerization initiators may be used alone, or two or more of the cationic polymerization initiators may be used in combination at any ratio.

Examples of the organic phosphines include tributylphosphine, methyldiphenylphosphine, triphenylphosphine, diphenylphosphine, and phenylphosphine.

These organic phosphines may be used alone, or two or more of the organic phosphines may be used in combination at any ratio.

When a polyfunctional phenol, an amine compound, or an acid anhydride compound is used as the curing agent (B), the curing agent (B) is preferably used such that the equivalent ratio of the functional group (a hydroxy group of the polyfunctional phenol, an amino group of the amine compound, or an acid anhydride group of the acid anhydride compound) in the curing agent (B) to the total epoxy groups in a curable resin composition according to the present invention ranges from 0.8 to 1.5.

When a polyisocyanate compound is used, the polyisocyanate compound is preferably used such that the equivalent ratio of the number of hydroxy groups in a curable resin composition according to the present invention to the number of isocyanate groups in the polyisocyanate compound ranges from 1:0.01 to 1:1.5.

When an imidazole compound is used, the imidazole compound is preferably used in the range of 0.5 to 10 parts by weight per 100 parts by weight of the total epoxy component contained as a solid component in a curable resin composition according to the present invention.

When an amide compound is used, the amide compound is preferably used in the range of 0.1% to 20% by weight of the total amount of the total epoxy component and the amide compound contained as solid components in a curable resin composition according to the present invention.

When a cationic polymerization initiator is used, the cationic polymerization initiator is preferably used in the range of 0.01 to 15 parts by weight per 100 parts by weight of the total epoxy component contained as a solid component in a curable resin composition according to the present invention.

When an organic phosphine is used, the organic phosphine is preferably used in the range of 0.1% to 20% by weight of the total amount of the total epoxy component and the organic phosphine contained as solid components in a curable resin composition according to the present invention.

In addition to these examples, the curing agent (B) may be a phosphonium salt, such as tetraphenylphosphonium tetraphenylborate, tetraphenylphosphonium ethyltriphenyl borate, or tetrabutylphosphonium tetrabutyl borate, a tetraphenylboron salt, such as 2-ethyl-4-methylimidazole tetraphenylborate or N-methylmorpholine tetraphenylborate, a mercaptan compound, an organic acid dihydrazide, or a halogenated boron amine complex.

These curing agents (B) may be used alone or in combination.

### [Other Epoxy Compounds (C)]

A curable resin composition according to the present invention may contain an epoxy compound (C) other than a polyorganosiloxane with an epoxy group (A) according to the present invention (hereinafter sometimes referred to as "another epoxy compound (C)").

Examples of the other epoxy compound (C) include bifunctional epoxy compounds (C) with two or more epoxy groups and also include epoxy compounds with an aromatic ring and aliphatic epoxy compounds, as exemplified below. In the following examples, "... type epoxy resin" refers to a resin in which a hydroxy group is substituted with a glycidyl ether group. For example, "4,4',4"-trihydroxytriphenylmethane type epoxy resin" refers to a resin in which a hydroxy group of "4,4',4"-trihydroxytriphenylmethane" is substituted with a glycidyl ether group.

Examples of the epoxy compounds with an aromatic ring include bisphenol diglycidyl ethers, such as bisphenol A diglycidyl ether, bisphenol F diglycidyl ether, bisphenol E diglycidyl ether, bisphenol Z diglycidyl ether, bisphenol S diglycidyl ether, bisphenol AD diglycidyl ether, bisphenol acetophenone diglycidyl ether, bisphenol trimethylcyclohexane diglycidyl ether, bisphenol fluorene diglycidyl ether, tetramethylbisphenol A diglycidyl ether, tetramethylbisphenol F diglycidyl ether, tetra-t-butylbisphenol A diglycidyl ether, and tetramethylbisphenol S diglycidyl ether; biphenol diglycidyl ethers, such as biphenol diglycidyl ether, tetramethylbiphenol diglycidyl ether, dimethylbiphenol diglycidyl ether, and tetra-t-butylbiphenol diglycidyl ether; benzenediol diglycidyl ethers, such as hydroquinone diglycidyl ether, dihydroanthracene diglycidyl ether, methylhydroquinone diglycidyl ether, dibutylhydroquinone diglycidyl ether, resorcinol diglycidyl ether, and methyl resorcinol diglycidyl ether; aromatic diglycidyl ethers, such as dihydroanthrahydroquinone diglycidyl ether, dihydroxydiphenyl ether diglycidyl ether, thiodiphenol diglycidyl ether, and dihydroxynaphthalene diglycidyl ether, trifunctional epoxy resins, such as α,α-bis(4-hydroxyphenyl)-4-(4-hydroxy-α,α-dimethylbenzyl)-ethylbenzene type epoxy resins, 4,4',4"-trihydroxytriphenylmethane type epoxy resins, 4,4',4"-ethylidyne tris(2-methylphenol) type epoxy resins, 4,4'-(2-hydroxybenzylidene)bis(2,3,6-trimethylphenol) type epoxy resins, 2,3,4-trihydroxydiphenylmethane type epoxy resins, 2,4,6-tris(4-hydroxyphenyl)-1,3,5-triazine type epoxy resins, 1,3,5-tris(4-hydroxyphenyl)benzene type epoxy resins, 1,1,1-tris(4-hydroxyphenyl)ethane type epoxy resins, 4,4'-[1-[4-[1-(4-hydroxy-3,5-dimethylphenyl)-1-methylethyl]phenyl]ethylidene]bis(2-methylphenol) type epoxy resins, and 2,6-bis(4-hydroxy-3,5-dimethylbenzyl)-4-methylphenol type epoxy resins; tetrafunctional epoxy resins, such as 2,2'-methylenebis[6-(2-hydroxy-5-methylbenzyl)-p-cresol type epoxy resins, 4-[bis(4-hydroxy-3-methylphenyl)methyl]benzene-1,2-diol type epoxy resins, 1,1,2,2-tetrakis(p-hydroxyphenyl)ethane type epoxy resins, and α,α,α',α',-tetrakis(4-hydroxyphenyl)-p-xylene type epoxy resins; pentafunctional epoxy resins, such as 2,4,6-tris[(4-hydroxyphenyl)methyl]-1,3-benzenediol type epoxy resins; epoxy compounds produced from various amine compounds, such as diaminodiphenylmethane, aminophenol, and xylene diamine, and epihalohydrins; phenol novolac type epoxy resins, cresol novolac type epoxy resins, bisphenol A novolac type epoxy resins, naphthol novolac type epoxy resins, phenolaralkyl type epoxy resins, biphenylaralkyl type epoxy resins, phenol modified xylene type epoxy resins, and polyhydric phenol resins produced by a condensation reaction of these various phenols and various aldehydes, such as hydroxybenzaldehyde, crotonaldehyde, and glyoxal, and polyfunctional epoxy resins, such as epoxy resins produced using various phenolic compounds, such as co-condensation resins of heavy oil or pitch, phenols, and formaldehydes.

Examples of the aliphatic epoxy compounds include epoxy compounds in which hydrogen is added to an aromatic ring of a diglycidyl ether selected from the bisphenol diglycidyl ethers, biphenol diglycidyl ethers, benzenediol diglycidyl ethers, and aromatic diglycidyl ethers; (poly)alkylene glycol diglycidyl ethers composed only of a chain structure, such as ethylene glycol diglycidyl ether, poly(ethylene glycol) diglycidyl ether, propylene glycol diglycidyl ether, poly(propylene glycol) diglycidyl ether, 1,4-butanediol diglycidyl ether, poly(tetramethylene glycol) diglycidyl ether, 1,5-pentanediol diglycidyl ether, poly(pentamethylene glycol) diglycidyl ether, 1,6-hexanediol diglycidyl ether, polyhexamethylene glycol diglycidyl ether, 1,7-heptanediol diglycidyl ether, poly(heptamethylene glycol) diglycidyl ether, 1,8-octanediol diglycidyl ether, 1,10-decanediol diglycidyl ether, and 2,2-dimethyl-1,3-propanediol diglycidyl ether; alkylene glycol diglycidyl ethers with a ring structure, such as 1,4-cyclohexanedimethanol diglycidyl ether, alicyclic epoxy resins, and heterocyclic epoxy resins.

Among these, the other epoxy compound (C) is preferably an aliphatic epoxy compound in terms of curability, surface properties of a coating film, adhesiveness, and impact resistance, particularly preferably a hydrogenated bisphenol diglycidyl ether.

These exemplified epoxy compounds (C) may be used alone or in combination.

When a curable resin composition according to the present invention contains a polyorganosiloxane with an epoxy group (A) according to the present invention and another epoxy compound (C), the ratio of the polyorganosiloxane with an epoxy group (A) to the total epoxy component as a solid component in the curable resin composition according to the present invention is preferably 0.1% or more by weight, more preferably 1% or more by weight, still more preferably 2% or more by weight, and preferably 98% or less by weight, more preferably 95% or less by weight, still more preferably 90% or less by weight. When the ratio of the polyorganosiloxane with an epoxy group (A) is equal to or higher than the lower limit, the polyorganosiloxane with an epoxy group (A) can sufficiently improve the curability. When the ratio of the polyorganosiloxane with an epoxy group (A) is equal to or lower than the upper limit, the addition of the other epoxy compound (C) can sufficiently improve the physical properties.

### <Other Components>

A curable resin composition according to the present invention may contain another component in addition to the components described above. Examples of the other component include a curing accelerator (other than those corresponding to the curing agents), a coupling agent, a flame retardant, an antioxidant, a light stabilizer, a plasticizer, a reactive diluent, a pigment, an inorganic filler, and an organic filler. These other components may be used in combination depending on the desired physical properties of a curable resin composition.

### [Cured Product]

A curable resin composition according to the present invention can be cured to form a cured product.

The term "curing", as used herein, refers to intentionally curing an epoxy resin by heat, light, and/or the like, and the degree of curing depends on desired physical properties and applications.

### [Applications]

A polyorganosiloxane with an epoxy group according to the present invention has high curability and provides a cured product with good surface properties, adhesiveness, and impact resistance. Thus, a polyorganosiloxane with an epoxy group according to the present invention and a curable resin composition according to the present invention containing the polyorganosiloxane can be suitably used in the fields of paints, stereolithography, electrical and electronic materials, adhesive agents, fiber-reinforced plastics (FRP), and the like.

### EXAMPLES

Although the present invention is more specifically described with the following examples, the present invention should not be limited to these examples.

Various production conditions and evaluation results in the examples have meanings as preferred upper limits or lower limits in the embodiments of the present invention. A preferred range may be a range defined by a combination of the upper or lower limit and a value in the example or examples.

### [Raw Materials, etc.]

The following raw materials, catalysts, and solvents were used in the examples and comparative examples.

### [Raw Materials, Catalysts, and Solvents Used for Synthesis of Polyorganosiloxane with Epoxy Group]

Hexamethyldisiloxane (manufactured by NuSil Technology, product name: S-7205)
1,1,3,3-tetramethyldisiloxane (manufactured by NuSil Technology) Methyl silicate MS51 (manufactured by Mitsubishi Chemical Corporation)
1,2-epoxy-4-vinylcyclohexane (manufactured by Tokyo Chemical Industry Co., Ltd.)
Allyl glycidyl ether (manufactured by Tokyo Chemical Industry Co., Ltd.)
Tetrahydrofuran (manufactured by Kishida Chemical Co., Ltd.)
Toluene (manufactured by Kishida Chemical Co., Ltd.)
Methanol (manufactured by Kishida Chemical Co., Ltd.)
Heptane (manufactured by Kishida Chemical Co., Ltd.)
1 N hydrochloric acid (manufactured by Kishida Chemical Co., Ltd.)
Solution of platinum(0)-1,3-divinyl-1,1,3,3-tetramethyldisiloxane complex in xylene (manufactured by Sigma-Aldrich Corporation, platinum concentration 2% by weight)
HS432 (manufactured by Umicore S.A., platinum catalyst)
Activated carbon (manufactured by Osaka Gas Chemicals Co., Ltd., Seisei Shirasagi)
Silica gel (manufactured by Kanto Chemical Co., Inc., silica gel 60N (spherical, neutral) 63-210 µm)

### [Curing Agents Used in Curable Resin Composition]

CPI-100P, CPI-200K (manufactured by San-Apro Ltd.)

### [Other Epoxy Compounds Used in Curable Resin Composition]

YX8000 (manufactured by Mitsubishi Chemical Corporation: hydrogenated bisphenol A type epoxy resin)
jER828US (manufactured by Mitsubishi Chemical Corporation: bisphenol A type epoxy resin)
KR-470 (manufactured by Shin-Etsu Chemical Co., Ltd.: silicone oligomer with alicyclic epoxy group)

### [Evaluation Method]

Evaluation methods in the following Synthesis Examples, Examples, and Comparative Examples are described below.

### [Epoxy Equivalent]

The epoxy equivalent of a polyorganosiloxane with an epoxy group prepared in each synthesis example was measured in accordance with JIS K 7236.

### [Number-Average Molecular Weight (Mn) and Weight-Average Molecular Weight (Mw) of Polyorganosiloxane with Epoxy Group]

The weight-average molecular weight and number-average molecular weight of a polyorganosiloxane with an epoxy group prepared in each synthesis example were measured by gel permeation chromatography (GPC). The apparatus and measurement conditions used for the GPC measurement are as follows:
Apparatus: GPC
Model: HLC-8220GPC (manufactured by Tosoh Corporation)
Column: KF-G, KF-401HQ, KF-402HQ, KF-402.5HQ (manufactured by Showa Denko K.K.)
Detector: UV-8020 (manufactured by Tosoh Corporation), 254 nm
Eluent: THF (0.3 mL/min, 40°C)
Sample: 1% tetrahydrofuran solution (10-µ injection)
Calibration curve: standard polystyrene (manufactured by Tosoh Corporation)

### [Infrared Absorption Spectral Analysis of Polyorganosiloxane with Epoxy Group]

A polyorganosiloxane with an epoxy group prepared in each synthesis example was subjected to attenuated total reflection (ATR, a total reflection measurement method) with the following apparatus under the following measurement conditions.
Apparatus: Nicolet iN10 + iZ10 (manufactured by Thermo Fisher Scientific Inc.) and Gladi ATR (manufactured by PIKE TECHNOLOGIES)
Resolution: 4 cm⁻¹
Number of scans: 64

### [²⁹Si-NMR Measurement Method]

Measurements were made using the following apparatus, measurement conditions, and sample preparation method.
Apparatus: JNM-ECS400, TUNABLE (10), Si-free, AT10 probe, manufactured by JEOL Ltd.
Measurement conditions: relaxation delay = 15 seconds, number of scans = 1024 times, measurement mode = non-gated decoupled pulse method (NNE), spin = none, measurement temperature = 25°C
Preparation of sample: Tris(2,4-pentanedionato)chromium(III) was added to deuterochloroform at 0.5% by weight to prepare a solvent for ²⁹Si-NMR measurement. 1.5 g of a polyorganosiloxane with an epoxy group to be measured was weighed, was dissolved in 2.5 ml of the solvent for ²⁹Si-NMR measurement, and was put into a 10-mmφ Teflon (registered trademark) NMR sample tube.

### [Measurement of Weight Loss Rate upon Heating under Reduced Pressure]

The procedures were as follows:
(1) ¹H-NMR was measured to calculate the weight of components other than a polyorganosiloxane with an epoxy group, such as an organic solvent.
(2) A rotor was put into an eggplant-shaped flask, and these were weighed. A polyorganosiloxane with an epoxy group was put into the eggplant-shaped flask and was weighed.
(3) The eggplant-shaped flask was heated to an internal temperature of 110°C in an oil bath while the rotor was rotated with a magnetic stirrer to move the liquid surface, and was evacuated with an oil vacuum pump. The oil vacuum pump had a capacity of reducing the pressure to 0.15 torr.
(4) After two hours, the eggplant-shaped flask was cooled to room temperature, was returned to normal pressure, and was wiped to sufficiently remove oil adhered thereon. The weight of the eggplant-shaped flask containing the polyorganosiloxane with an epoxy group was measured, and the measured weight of the eggplant-shaped flask and the rotor was subtracted to calculate the weight volatilized by the operation.
(5) The ¹H-NMR of the polyorganosiloxane with an epoxy group after the operation was measured to calculate the weight of components other than the polyorganosiloxane with an epoxy group, such as an organic solvent.

The weight loss rate of the polyorganosiloxane with an epoxy group was calculated by subtracting the amount of components other than the polyorganosiloxane with an epoxy group from the volatile weight.

### [UV Curability]

100 parts by weight of each epoxy resin component of the examples and comparative examples was sufficiently mixed with 2 parts by weight of CPI-200K based on the solid content to prepare a curable resin composition. The curable resin composition was applied to a PET film with a film applicator at a thickness of 50 µm and was subjected to UV radiation at such a UV radiation dose that the tackiness of the coating film disappeared. The UV curability was evaluated according to the following criteria.
O: High curability at 100 mJ/cm² or less.
X: Low curability at more than 100 mJ/cm².

### [Compatibility]

The following amount of curing agent or epoxy compound was added to 100 parts by weight of each epoxy resin component of the examples and comparative examples. The compatibility was evaluated by the presence or absence of cloudiness.
Curing agent: CPI-100P (2 parts by weight)
Epoxy compound: jER828US (100 parts by weight)
O: No cloudiness (high compatibility)
X: Cloudiness (low compatibility)

### [Viscosity]

The viscosity of each epoxy resin component of the examples and comparative examples was measured with an E-type viscometer at 25°C.

### [Synthesis and Evaluation of Polyorganosiloxane with Epoxy Group]

### <Synthesis Example 1: Synthesis of Polyorganosiloxane with Epoxy Group 1>

A mixture of 625 parts by weight of 1,1,3,3-tetramethyldisiloxane, 504 parts by weight of hexamethyldisiloxane, and 422 parts by weight of methyl silicate MS51 as raw materials of a polyorganosiloxane with an epoxy group, 987 parts by weight of tetrahydrofuran as a solvent, and a mixture as a catalyst and water composed of 115 parts by weight of 1 N hydrochloric acid and 115 parts by weight of methanol was subjected to hydrolysis and condensation at 30°C. 938 parts by weight of heptane was added to the mixture, and the hydrochloric acid was removed by washing with demineralized water. The solvent was then evaporated with a rotary evaporator at 76°C under a reduced pressure of 15 torr until the evaporation of the solvent was not visually observed. The product was then heated at 120°C under a reduced pressure of 0.15 torr for 2 hours. Thus, 727 parts by weight of a polyorganosiloxane precursor with an epoxy group 1 was prepared.

75 parts by weight of the polyorganosiloxane precursor with an epoxy group 1 was dissolved in 132 parts by weight of heptane. 1.4 parts by weight of a catalyst-containing solution containing HS432 dissolved in heptane at a platinum concentration of 0.2% by weight was added and stirred. After heating to 75°C, a mixture of 91 parts by weight of 1,2-epoxy-4-vinylcyclohexane and 32 parts by weight of allyl glycidyl ether was added dropwise over 1 hour and was heated at 75°C for another 2.5 hours. After cooling to near room temperature, 15 parts by weight of activated carbon was added, and the mixture was stirred for 2 hours and was then filtered. The solvent was then evaporated from the solution with a rotary evaporator at 60°C under a reduced pressure of 15 torr until the evaporation of the solvent was not visually observed. The product was then heated at 85°C under a reduced pressure of 0.15 torr for 3 hours. Thus, 305 parts by weight of a polyorganosiloxane with an epoxy group 1 was prepared.

The polyorganosiloxane with an epoxy group 1 had an epoxy equivalent of 221 gram/equivalent, a number-average molecular weight of 1400, a weight-average molecular weight of 1600, a degree of dispersion (Mw/Mn) of 1.1, a mole ratio of a group represented by the formula (2) to a group represented by the formula (3) (hereinafter referred to as a "formula (2)/formula (3) ratio") of 22/78, and an M unit content, a D unit content, a T unit content, and a Q unit content of 63%, 5%, 0%, and 32% by mole of the total silicon, respectively. In the infrared absorption spectral analysis, the maximum absorption wave number of the Si-O stretching vibration was 1045 cm⁻¹, and there was no absorption peak of the Si-O stretching vibration in the wave number range of 1070 to 1150 cm⁻¹. The weight loss rate upon heating under reduced pressure was 2.6% by weight.

### <Synthesis Example 2: Synthesis of Polyorganosiloxane with Epoxy Group 2>

After 75 parts by weight of a polyorganosiloxane precursor with an epoxy group 1 prepared in the same manner as in Synthesis Example 1 was dissolved in 132 parts by weight of heptane, 1.4 parts by weight of a catalyst-containing solution containing HS432 dissolved in heptane at a platinum concentration of 0.2% by weight was added and stirred. After heating to 75°C, a mixture of 63 parts by weight of 1,2-epoxy-4-vinylcyclohexane and 58 parts by weight of allyl glycidyl ether was added dropwise over 1 hour and was heated at 75°C for another 10 hours. After cooling to near room temperature, 15 parts by weight of activated carbon was added, and the mixture was stirred for 2 hours and was then filtered. The solvent was then evaporated from the solution with a rotary evaporator at 60°C under a reduced pressure of 15 torr until the evaporation of the solvent was not visually observed. The product was then heated at 85°C under a reduced pressure of 0.15 torr for 3 hours. Thus, 305 parts by weight of a polyorganosiloxane with an epoxy group 2 was prepared.

The polyorganosiloxane with an epoxy group 2 had an epoxy equivalent of 219 gram/equivalent, a number-average molecular weight of 1400, a weight-average molecular weight of 1600, a degree of dispersion (Mw/Mn) of 1.1, a formula (2)/formula (3) ratio of 45/55, and an M unit content, a D unit content, a T unit content, and a Q unit content of 60%, 4%, 0%, and 35% by mole of the total silicon, respectively. In the infrared absorption spectral analysis, the maximum absorption wave number of the Si-O stretching vibration was 1045 cm⁻¹, and there was no absorption peak of the Si-O stretching vibration in the wave number range of 1070 to 1150 cm⁻¹. The weight loss rate upon heating under reduced pressure was 2.2% by weight.

### <Synthesis Example 3: Synthesis of Polyorganosiloxane with Epoxy Group 3>

A mixture of 625 parts by weight of 1,1,3,3-tetramethyldisiloxane, 504 parts by weight of hexamethyldisiloxane, and 422 parts by weight of methyl silicate MS51 as raw materials of a polyorganosiloxane with an epoxy group, 987 parts by weight of tetrahydrofuran as a solvent, and 115 parts by weight of 1 N hydrochloric acid and 115 parts by weight of methanol as a catalyst and water was subjected to hydrolysis and condensation at 30°C. 938 parts by weight of heptane was added to the mixture, and the hydrochloric acid was removed by washing with demineralized water. The solvent was then evaporated with a rotary evaporator at 76°C under a reduced pressure of 15 torr until the evaporation of the solvent was not visually observed. The product was then heated at 120°C under a reduced pressure of 0.15 torr for 2 hours. Thus, 768 parts by weight of a polyorganosiloxane precursor with an epoxy group 3 was prepared.

200 parts by weight of the polyorganosiloxane precursor with an epoxy group 3 was dissolved in 257 parts by weight of toluene. 0.5 parts by weight of a solution of a platinum(0)-1,3-divinyl-1,1,3,3-tetramethyldisiloxane complex in xylene with a platinum concentration of 2% by weight was added and stirred. After heating to 80°C, 234 parts by weight of 1,2-epoxy-4-vinylcyclohexane was added dropwise over 4 hours and was heated at 80°C for another 5 hours. After cooling to near room temperature, 69 parts by weight of activated carbon was added, and the mixture was stirred for 2 hours and was then filtered. This process from the addition of activated carbon to filtration was performed again. The solvent was then evaporated from the solution with a rotary evaporator at 60°C under a reduced pressure of 15 torr until the evaporation of the solvent was not visually observed. The product was then heated at 85°C under a reduced pressure of 0.15 torr for 5 hours. Thus, 305 parts by weight of a polyorganosiloxane with an epoxy group 3 was prepared.

The polyorganosiloxane with an epoxy group 3 had an epoxy equivalent of 323 gram/equivalent, a number-average molecular weight of 1300, a weight-average molecular weight of 2300, a degree of dispersion (Mw/Mn) of 1.8, a formula (2)/formula (3) ratio of 0/100, and an M unit content, a D unit content, a T unit content, and a Q unit content of 67%, 2%, 0%, and 31% by mole of the total silicon, respectively. In the infrared absorption spectral analysis, the maximum absorption wave number of the Si-O stretching vibration was 1045 cm⁻¹, and there was no absorption peak of the Si-O stretching vibration in the wave number range of 1070 to 1150 cm⁻¹. The weight loss rate upon heating under reduced pressure was 1.2% by weight.

### <Synthesis Example 4: Synthesis of Polyorganosiloxane with Epoxy Group 4>

A mixture of 833 parts by weight of 1,1,3,3-tetramethyldisiloxane, 252 parts by weight of hexamethyldisiloxane, and 422 parts by weight of methyl silicate MS51 as raw materials of a polyorganosiloxane with an epoxy group, 965 parts by weight of tetrahydrofuran as a solvent, and 115 parts by weight of 1 N hydrochloric acid and 115 parts by weight of methanol as a catalyst and water was subjected to hydrolysis and condensation at 30°C. 938 parts by weight of heptane was added to the mixture, and the hydrochloric acid was removed by washing with demineralized water. The solvent was then evaporated with a rotary evaporator at 76°C under a reduced pressure of 15 torr until the evaporation of the solvent was not visually observed. The product was then heated at 120°C under a reduced pressure of 0.15 torr for 2 hours. Thus, 744 parts by weight of a polyorganosiloxane precursor with an epoxy group 4 was prepared.

200 parts by weight of the polyorganosiloxane precursor with an epoxy group 4 was dissolved in 345 parts by weight of toluene. 0.6 parts by weight of a solution of a platinum(0)-1,3-divinyl-1,1,3,3-tetramethyldisiloxane complex in xylene with a platinum concentration of 2% by weight was added and stirred. After heating to 80°C, 234 parts by weight of 1,2-epoxy-4-vinylcyclohexane was added dropwise over 5 hours and was heated at 80°C for another 13 hours. After cooling to near room temperature, 79 parts by weight of activated carbon was added, and the mixture was stirred for 2 hours and was then filtered. The solvent was then evaporated from the solution with a rotary evaporator at 60°C under a reduced pressure of 15 torr until the evaporation of the solvent was not visually observed. The product was then heated at 80°C under a reduced pressure of 0.15 torr for 5 hours. Thus, 373 parts by weight of a polyorganosiloxane with an epoxy group 4 was prepared.

The polyorganosiloxane with an epoxy group 4 had an epoxy equivalent of 221 gram/equivalent, a number-average molecular weight of 1500, a weight-average molecular weight of 3400, a degree of dispersion (Mw/Mn) of 2.3, a formula (2)/formula (3) ratio of 0/100, and an M unit content, a D unit content, a T unit content, and a Q unit content of 68%, 2%, 0%, and 30% by mole of the total silicon, respectively. In the infrared absorption spectral analysis, the maximum absorption wave number of the Si-O stretching vibration was 1043 cm⁻¹, and there was no absorption peak of the Si-O stretching vibration in the wave number range of 1070 to 1150 cm⁻¹.

### <Synthesis Example 5: Synthesis of Polyorganosiloxane with Epoxy Group 5>

150 parts by weight of a polyorganosiloxane with an epoxy group 1 prepared in the same manner as in Synthesis Example 1 was dissolved in 331 parts by weight of toluene. 0.2 parts by weight of a solution of a platinum(0)-1,3-divinyl-1,1,3,3-tetramethyldisiloxane complex in xylene with a platinum concentration of 2% by weight was added and stirred. After heating to 80°C, 208 parts by weight of allyl glycidyl ether was added dropwise over 1 hour and was further heated at 120°C for 1 hour. After cooling to near room temperature, 150 parts by weight of silica gel was added, and the mixture was stirred for 30 minutes and was then filtered. The solvent was then evaporated from the solution with a rotary evaporator at 60°C under a reduced pressure of 15 torr until the evaporation of the solvent was not visually observed. The product was then heated at 80°C under a reduced pressure of 0.15 torr for 2 hours. Thus, 287 parts by weight of a polyorganosiloxane with an epoxy group 5 was prepared.

The polyorganosiloxane with an epoxy group 5 had an epoxy equivalent of 247 gram/equivalent, a number-average molecular weight of 1500, a weight-average molecular weight of 1600, a degree of dispersion (Mw/Mn) of 1.1, a formula (2)/formula (3) ratio of 100/0, and an M unit content, a D unit content, a T unit content, and a Q unit content of 65%, 4%, 0%, and 32% by mole of the total silicon, respectively. In the infrared absorption spectral analysis, the maximum absorption wave number of the Si-O stretching vibration was 1045 cm⁻¹, and there was no absorption peak of the Si-O stretching vibration in the wave number range of 1070 to 1150 cm⁻¹. The weight loss rate upon heating under reduced pressure was 1.2% by weight.

### <Synthesis Example 6: Synthesis of Polyorganosiloxane with Epoxy Group 6>

A mixture of 520 parts by weight of 1,1,3,3-tetramethyldisiloxane, 0 parts by weight of hexamethyldisiloxane, and 422 parts by weight of methyl silicate MS51 as raw materials of a polyorganosiloxane with an epoxy group, 943 parts by weight of tetrahydrofuran as a solvent, and 115 parts by weight of 1 N hydrochloric acid and 115 parts by weight of methanol as a catalyst and water was subjected to hydrolysis and condensation at 30°C. 938 parts by weight of heptane was added to the mixture, and the hydrochloric acid was removed by washing with demineralized water. The solvent was then evaporated with a rotary evaporator at 76°C under a reduced pressure of 15 torr until the evaporation of the solvent was not visually observed. The product was then heated at 120°C under a reduced pressure of 0.15 torr for 2 hours. Thus, 729 parts by weight of a polyorganosiloxane precursor with an epoxy group 6 was prepared.

200 parts by weight of the polyorganosiloxane precursor with an epoxy group 6 was dissolved in 451 parts by weight of toluene. 3.8 parts by weight of a catalyst-containing solution containing HS432 dissolved in toluene at a platinum concentration of 0.2% by weight was added and stirred. After heating to 75°C, 19 parts by weight of 1,2-epoxy-4-vinylcyclohexane and 124 parts by weight of allyl glycidyl ether were added dropwise over 1 hour and were heated at 75°C for another 2.5 hours. After cooling to near room temperature, 15 parts by weight of activated carbon was added, and the mixture was stirred for 2 hours and was then filtered. The solvent was then evaporated from the solution with a rotary evaporator at 76°C under a reduced pressure of 15 torr until the evaporation of the solvent was not visually observed. The product was then heated at 76°C under a reduced pressure of 0.15 torr for 3 hours. Thus, 307 parts by weight of a polyorganosiloxane with an epoxy group 6 was prepared.

The polyorganosiloxane with an epoxy group 6 had an epoxy equivalent of 233 gram/equivalent, a number-average molecular weight of 1600, a weight-average molecular weight of 2000, a degree of dispersion (Mw/Mn) of 1.3, a mole ratio of a group represented by the formula (2) to a group represented by the formula (3) (hereinafter referred to as a "formula (2)/formula (3) ratio") of 77/23, and an M unit content, a D unit content, a T unit content, and a Q unit content of 61%, 6%, 0%, and 33% by mole of the total silicon, respectively.

Table 1 summarizes the evaluation results of the polyorganosiloxanes with an epoxy group 1 to 6.

**[Table 1]**

| | | Polyorganosiloxane with epoxy group | | | | | |
|---|---|---|---|---|---|---|---|
| | | 1 | 2 | 3 | 4 | 5 | 6 |
| Epoxy equivalent (gram/equivalent) | | 221 | 219 | 323 | 221 | 247 | 233 |
| Formula (2)/formula (3) ratio (mol%/mol%) | | 22/78 | 45/55 | 0/100 | 0/100 | 100/0 | 77/23 |
| Number-average molecular weight (Mn) | | 1400 | 1400 | 1300 | 1500 | 1500 | 1600 |
| Weight-average molecular weight (Mw) | | 1600 | 1600 | 2300 | 3400 | 1600 | 2000 |
| Degree of dispersion (Mw/Mn) | | 1.1 | 1.1 | 1.8 | 2.3 | 1.1 | 1.3 |
| Ratio to total silicon (mol%) | M unit | 63 | 60 | 67 | 68 | 65 | 61 |
| | D unit | 5 | 4 | 2 | 2 | 4 | 6 |
| | T unit | 0 | 0 | 0 | 0 | 0 | 0 |
| | Q unit | 32 | 35 | 31 | 30 | 32 | 33 |
| Maximum absorption wave number of Si-O stretching vibration (cm⁻¹) | | 1045 | 1045 | 1045 | 1043 | 1045 | - |
| Weight loss rate upon heating under reduced pressure (% by weight) | | 2.6 | 2.2 | 1.2 | - | 1.2 | - |
| Note | | Examples | | Comparative examples | | | Example |

### [Examples 1 to 5 and Comparative Examples 1 to 5]

The components were mixed as shown in Table 2 to prepare an epoxy resin component, and various evaluations were performed as described above. Table 2 shows the results.

**[Table 2]**

| | | | | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|---|---|---|
| Epoxy resin component (parts by weight) | Polyorganosiloxane with epoxy group | Polyorganosiloxane with epoxy group 1 | | 100 | | 50 | 50 | | | | | | |
| | | Polyorganosiloxane with epoxy group 2 | | | 100 | | | | | | | | |
| | | Polyorganosiloxane with epoxy group 3 | | | | | | | 100 | | | | 50 |
| | | Polyorganosiloxane with epoxy group 4 | | | | | | | | 100 | | | |
| | | Polyorganosiloxane with epoxy group 5 | | | | | | | | | 100 | | 50 |
| | | Polyorganosiloxane with epoxy group 6 | | | | | | 100 | | | | | |
| | Other epoxy compounds | KR-470 | | | | | | | | | | 100 | |
| | | YX8000 | | | | 50 | | | | | | | |
| | | jER828US | | | | | 50 | | | | | | |
| Evaluation results | | Compatibility (CPI-100P) | | O | O | O | O | O | X | X | O | O | X |
| | | Compatibility (jER828US) | | O | O | O | O | O | X | X | O | X | X |
| | | UV curability | UV radiation dose (mJ/cm²) | 50 | 75 | 50 | 75 | 75 | 100 | 75 | 400 | 100 | 200 |
| | | | Rating | O | O | O | O | O | O | O | X | O | X |
| | | Viscosity [mPa·sec] | | 1800 | 710 | 1420 | 3540 | 400 | 2000 | 3800 | 170 | 3000 | 440 |

### [Discussions]

Table 2 shows that the epoxy resin components of Examples 1 to 5 containing a polyorganosiloxane with an epoxy group according to the present invention had high UV curability, high compatibility, and good viscosity as curable resin compositions.

By contrast, the epoxy resin components of Comparative Examples 1, 2, and 4 had insufficient compatibility. The epoxy resin component of Comparative Example 3 had insufficient UV curability. The epoxy resin component of Comparative Example 5 had insufficient compatibility and UV curability.

The present invention has been described in detail with reference to specific aspects. However, it will be understood by a person skilled in the art that various modifications can be made without departing from the scope of the invention.

The present invention contains subject matter related to Japanese Patent Application No. 2019-154804 filed on August 27, 2019.

### Industrial Applicability

A polyorganosiloxane with an epoxy group according to the present invention has high curability and provides a cured product with good surface properties, adhesiveness, and impact resistance. Therefore, a polyorganosiloxane with an epoxy group according to the present invention, a curable resin composition containing the polyorganosiloxane with an epoxy group, and a cured product thereof can be suitably used in the fields of paints, inks for 2D/3D printers, electrical and electronic materials, adhesive agents, fiber-reinforced plastics (FRP), dental materials, and the like.

## Claims

1. A polyorganosiloxane with an epoxy group comprising an M unit (R¹R²R³SiO_{1/2}), a D unit (R⁴R⁵SiO_{2/2}), and a Q unit (SiO_{4/2}), a T unit (R⁶SiO_{3/2}) content being 80% or less by mole of total silicon, the epoxy group having a group represented by the following formula (2) and a group represented by the following formula (3): 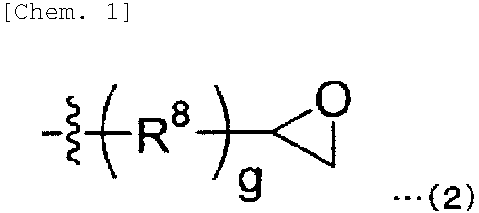
wherein R⁸ denotes an optionally substituted divalent organic group having 1 to 20 carbon atoms, and g is 0 or 1, 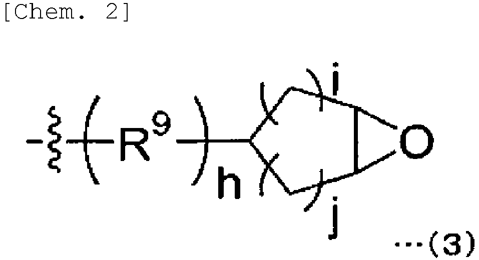
wherein R⁹ denotes an optionally substituted divalent organic group having 1 to 20 carbon atoms, and h is 0 or 1, 0 ≤ i ≤ 8, and 0 ≤ j ≤ 8.

2. The polyorganosiloxane with an epoxy group according to Claim 1, wherein the mole ratio of the group represented by the formula (2) to the group represented by the formula (3) ranges from 5:95 to 95:5.

3. The polyorganosiloxane with an epoxy group according to Claim 1 or 2, wherein the group represented by the formula (2) is a group represented by the following formula (4) and/or a group represented by the following formula (5).

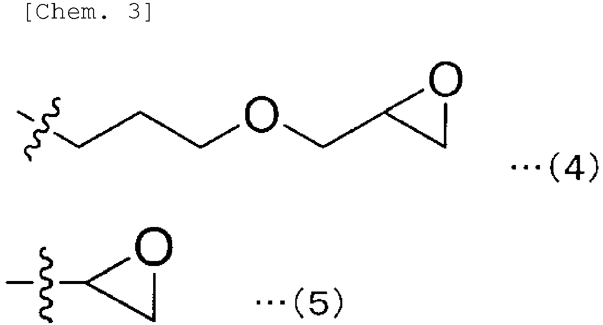

4. The polyorganosiloxane with an epoxy group according to any one of Claims 1 to 3, wherein the formula (3) is at least one group selected from the group consisting of groups represented by the following formula (6), groups represented by the following formula (7), and groups represented by the following formula (8).

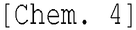

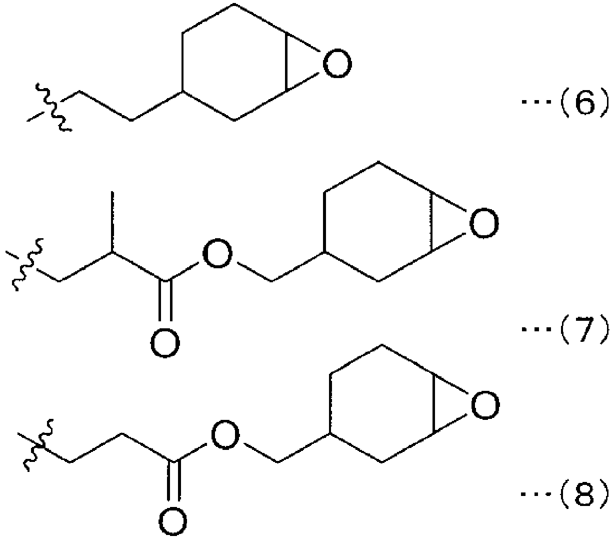

5. The polyorganosiloxane with an epoxy group according to any one of Claims 1 to 4, wherein a weight loss rate upon heating at 110°C for 2 hours under a reduced pressure of 0.15 torr is 5% or less by weight.

6. The polyorganosiloxane with an epoxy group according to any one of Claims 1 to 5, wherein an M unit (R¹R²R³SiO_{1/2}) content ranges from 10% to 75% by mole of the total silicon.

7. The polyorganosiloxane with an epoxy group according to any one of Claims 1 to 6, wherein a Q unit (SiO_{4/2}) content is 3% or more by mole of the total silicon.

8. The polyorganosiloxane with an epoxy group according to any one of Claims 1 to 7, wherein a maximum absorption wave number of a Si-O stretching vibration is present in a wave number range of 1030 to 1060 cm⁻¹ in infrared absorption spectrum analysis.

9. The polyorganosiloxane with an epoxy group according to any one of Claims 1 to 8, wherein a D unit (R⁴R⁵SiO_{2/2}) content is 10% or less by mole of the total silicon.

10. The polyorganosiloxane with an epoxy group according to any one of Claims 1 to 9, wherein an epoxy equivalent ranges from 100 to 5000 gram/equivalent.

11. A curable resin composition comprising: a polyorganosiloxane with an epoxy group (A) according to any one of Claims 1 to 10; and a curing agent (B).

12. The curable resin composition according to Claim 11, wherein the curing agent (B) is a cationic polymerization initiator.

13. The curable resin composition according to Claim 11 or 12, further comprising an epoxy compound (C) different from the polyorganosiloxane with an epoxy group (A).

14. The curable resin composition according to Claim 13, wherein the epoxy compound (C) is an aromatic epoxy compound.

15. The curable resin composition according to Claim 13, wherein the epoxy compound (C) is an aliphatic epoxy compound.

16. The curable resin composition according to Claim 13, wherein the epoxy compound (C) is a hydrogenated bisphenol diglycidyl ether.

17. The curable resin composition according to any one of Claims 13 to 16, wherein the polyorganosiloxane with an epoxy group (A) constitutes 0.1% to 98% by weight of a total amount of the polyorganosiloxane with an epoxy group (A) and the epoxy compound (C).

18. A cured product produced by curing the curable resin composition according to any one of Claims 11 to 17.

## Patentansprüche

1. Polyorganosiloxan mit einer Epoxidgruppe, die eine M-Einheit (R¹R2R³SiO_{1/2}), eine D-Einheit (R⁴R⁵SiO_{2/2}) und eine Q-Einheit (SiO_{4/2}) umfasst, wobei der Gehalt an einer T-Einheit (R⁶SiO_{3/2}) 80 Molprozent oder weniger des gesamten Siliciums beträgt, wobei die Epoxidgruppe eine durch die folgende Formel (2) dargestellte Gruppe und eine durch die folgende Formel (3) dargestellte Gruppe aufweist: 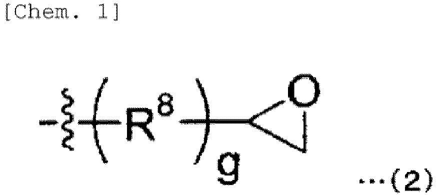 wobei R⁸ eine optional substituierte divalente organische Gruppe mit 1 bis 20 Kohlenstoffatomen bezeichnet, und g gleich 0 oder 1 ist, 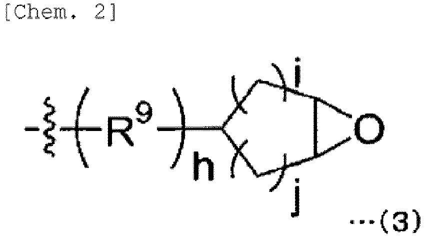 wobei R⁹ eine optional substituierte divalente organische Gruppe mit 1 bis 20 Kohlenstoffatomen bezeichnet und h gleich 0 oder 1, 0 ≤ i ≤ 8, und 0 ≤ j ≤ 8 ist.

2. Polyorganosiloxan mit einer Epoxidgruppe nach Anspruch 1, wobei das Molverhältnis der durch die Formel (2) dargestellten Gruppe zu der durch die Formel (3) dargestellten Gruppe im Bereich von 5 : 95 bis 95 : 5 liegt.

3. Polyorganosiloxan mit einer Epoxidgruppe nach Anspruch 1 oder 2, wobei die durch die Formel (2) dargestellte Gruppe eine durch die folgende Formel (4) dargestellte Gruppe und/oder eine durch die folgende Formel (5) dargestellte Gruppe ist.

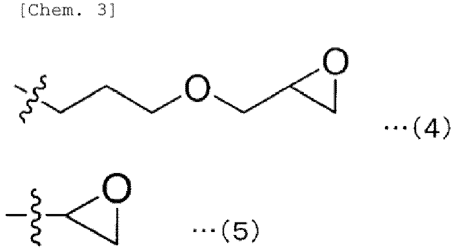

4. Polyorganosiloxan mit einer Epoxidgruppe nach einem der Ansprüche 1 bis 3, wobei die Formel (3) mindestens eine Gruppe ist, ausgewählt aus der Gruppe, bestehend aus Gruppen, die durch die folgende Formel (6) dargestellt werden, Gruppen, die durch die folgende Formel (7) dargestellt werden, und Gruppen, die durch die folgende Formel (8) dargestellt werden.

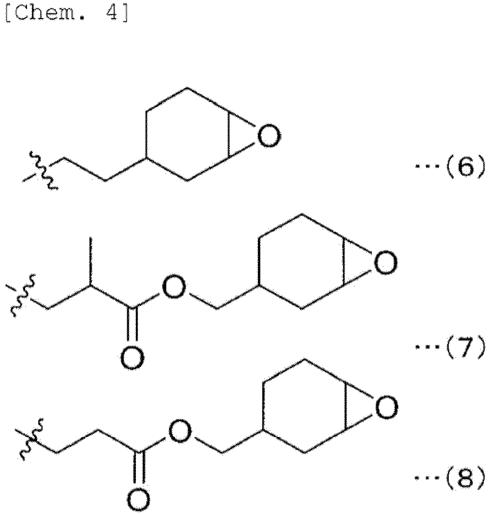

5. Polyorganosiloxan mit einer Epoxidgruppe nach einem der Ansprüche 1 bis 4, wobei eine Gewichtsverlustrate beim Erhitzen bei 110° für 2 Stunden unter einem reduzierten Druck von 0,15 Torr 5 Gew.-% oder weniger beträgt.

6. Polyorganosiloxan mit einer Epoxidgruppe nach einem der Ansprüche 1 bis 5, wobei ein Gehalt an M-Einheit (R¹R²R³SiO_{1/2}) im Bereich von 10 bis 75 Mol-% des gesamten Siliciums liegt.

7. Polyorganosiloxan mit einer Epoxidgruppe nach einem der Ansprüche 1 bis 6, wobei ein Gehalt an Q-Einheit (SiO_{4/2}) 3 oder mehr Mol-% des gesamten Siliciums beträgt.

8. Polyorganosiloxan mit einer Epoxidgruppe nach einem der Ansprüche 1 bis 7, wobei eine maximale Absorptionswellenzahl einer Si-O-Streckschwingung in einem Wellenzahlbereich von 1030 bis 1060 cm⁻¹ in der Infrarotabsorptionsspektralanalyse vorliegt.

9. Polyorganosiloxan mit einer Epoxidgruppe nach einem der Ansprüche 1 bis 8, wobei ein Gehalt an D-Einheit (R⁴R⁵S₁O_{2/2}) 10 Mol-% oder weniger des gesamten Siliciums beträgt.

10. Polyorganosiloxan mit einer Epoxidgruppe nach einem der Ansprüche 1 bis 9, wobei ein Epoxidäquivalent im Bereich von 100 bis 5000 Gramm/Äquivalent liegt.

11. Härtbare Harzzusammensetzung, umfassend: ein Polyorganosiloxan mit einer Epoxidgruppe (A) nach einem der Ansprüche 1 bis 10; und ein Härtungsmittel (B).

12. Härtbare Harzzusammensetzung nach Anspruch 11, wobei das Härtungsmittel (B) ein kationischer Polymerisationsinitiator ist.

13. Härtbare Harzzusammensetzung nach Anspruch 11 oder 12, weiter umfassend eine Epoxidverbindung (C), die sich von dem Polyorganosiloxan mit einer Epoxidgruppe (A) unterscheidet.

14. Härtbare Harzzusammensetzung nach Anspruch 13, wobei die Epoxidverbindung (C) eine aromatische Epoxidverbindung ist.

15. Härtbare Harzzusammensetzung nach Anspruch 13, wobei die Epoxidverbindung (C) eine aliphatische Epoxidverbindung ist.

16. Härtbare Harzzusammensetzung nach Anspruch 13, wobei die Epoxidverbindung (C) ein hydrierter Bisphenoldiglycidylether ist.

17. Härtbare Harzzusammensetzung nach einem der Ansprüche 13 bis 16, wobei das Polyorganosiloxan mit einer Epoxidgruppe (A) 0,1 bis 98 Gew.-% der Gesamtmenge des Polyorganosiloxans mit einer Epoxidgruppe (A) und der Epoxidverbindung (C) ausmacht.

18. Gehärtetes Produkt, hergestellt durch Härten der härtbaren Harzzusammensetzung nach einem der Ansprüche 11 bis 17.

## Revendications

1. Polyorganosiloxane avec un groupe époxyde comportant un motif M (R1R²R³SiO_{1/2}), un motif D (R⁴R⁵SiO_{2/2}) et un motif Q (SiO_{4/2}), une teneur en motif T (R⁶SiO_{3/2}) étant de 80 % ou moins par mole de silicium total, le groupe époxyde possédant un groupe représenté par la formule (2) suivante et un groupe représenté par la formule (3) suivante : 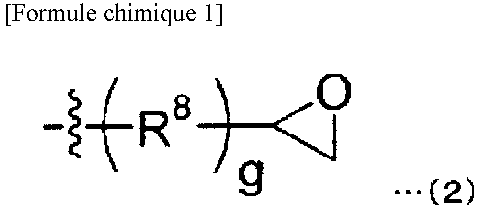
dans laquelle R⁸ représente un groupe organique divalent facultativement substitué possédant 1 à 20 atomes de carbone, et g vaut 0 ou 1, 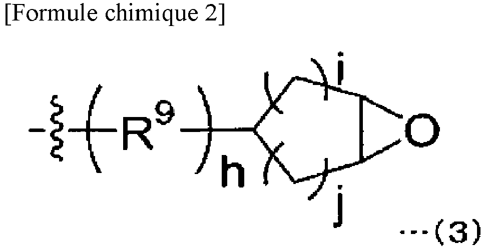
dans laquelle R⁹ représente un groupe organique divalent facultativement substitué possédant 1 à 20 atomes de carbone, et h vaut 0 ou 1, 0 ≤ i ≤ 8, et 0 ≤ j ≤ 8.

2. Polyorganosiloxane avec un groupe époxyde selon la revendication 1, dans lequel le rapport molaire du groupe représenté par la formule (2) sur le groupe représenté par la formule (3) varie de 5:95 à 95:5.

3. Polyorganosiloxane avec un groupe époxyde selon la revendication 1 ou 2, dans lequel le groupe représenté par la formule (2) est un groupe représenté par la formule (4) suivante et/ou un groupe représenté par la formule (5) suivante.

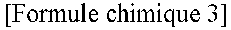

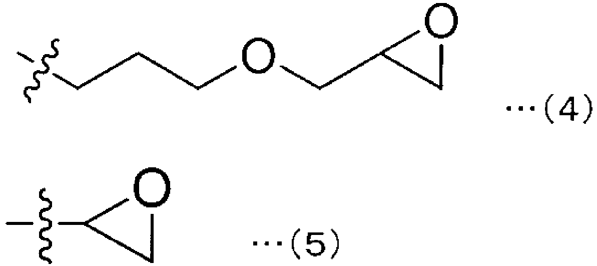

4. Polyorganosiloxane avec un groupe époxyde selon l'une quelconque des revendications 1 à 3, dans lequel la formule (3) est au moins un groupe choisi parmi le groupe constitué de groupes représentés par la formule (6) suivante, de groupes représentés par la formule (7) suivante et de groupes représentés par la formule (8) suivante.

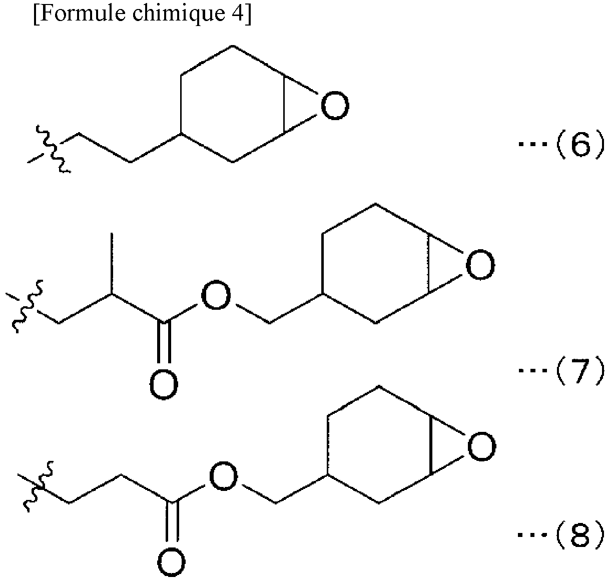

5. Polyorganosiloxane avec un groupe époxyde selon l'une quelconque des revendications 1 à 4, dans lequel un taux de perte de poids lors d'un chauffage à 110 °C pendant 2 heures sous une pression réduite de 0,15 torr est de 5 % en poids ou moins.

6. Polyorganosiloxane avec un groupe époxyde selon l'une quelconque des revendications 1 à 5, dans lequel une teneur en motif M (R1R²R³SiO_{1/2}) varie de 10 % à 75 % par mole du silicium total.

7. Polyorganosiloxane avec un groupe époxyde selon l'une quelconque des revendications 1 à 6, dans lequel une teneur en motif Q (SiO_{4/2}) est de 3 % ou plus par mole du silicium total.

8. Polyorganosiloxane avec un groupe époxyde selon l'une quelconque des revendications 1 à 7, dans lequel un nombre d'onde d'absorption maximal d'une vibration d'étirement de Si-O est présent dans une plage de nombres d'onde de 1 030 à 1 060 cm⁻¹ dans une analyse du spectre d'absorption infrarouge.

9. Polyorganosiloxane avec un groupe époxyde selon l'une quelconque des revendications 1 à 8, dans lequel une teneur en motif D (R⁴R⁵SiO_{2/2}) est de 10 % ou moins par mole du silicium total.

10. Polyorganosiloxane avec un groupe époxyde selon l'une quelconque des revendications 1 à 9, dans lequel un équivalent époxyde varie de 100 à 5 000 grammes/équivalent.

11. Composition de résine durcissable comportant : un polyorganosiloxane avec un groupe époxyde (A) selon l'une quelconque des revendications 1 à 10 ; et un agent durcisseur (B).

12. Composition de résine durcissable selon la revendication 11, dans laquelle l'agent durcisseur (B) est un initiateur de polymérisation cationique.

13. Composition de résine durcissable selon la revendication 11 ou 12, comportant en outre un composé époxyde (C) différent du polyorganosiloxane avec un groupe époxyde (A).

14. Composition de résine durcissable selon la revendication 13, dans laquelle le composé époxyde (C) est un composé époxyde aromatique.

15. Composition de résine durcissable selon la revendication 13, dans laquelle le composé époxyde (C) est un composé époxyde aliphatique.

16. Composition de résine durcissable selon la revendication 13, dans laquelle le composé époxyde (C) est un éther diglycidylique de bisphénol hydrogéné.

17. Composition de résine durcissable selon l'une quelconque des revendications 13 à 16, dans laquelle le polyorganosiloxane avec un groupe époxyde (A) constitue de 0,1 % à 98 % en poids d'une quantité totale du polyorganosiloxane avec un groupe époxyde (A) et du composé époxyde (C).

18. Produit durci produit en durcissant la composition de résine durcissable selon l'une quelconque des revendications 11 à 17.
